# EUROPÄISCHE PATENTSCHRIFT

(11) **EP 2 352 573 B1**
(45) Veröffentlichungstag und Bekanntmachung des Hinweises auf die Patenterteilung: **03.07.2013**
(21) Anmeldenummer: 09764178.1
(22) Anmeldetag: 05.11.2009
(51) Int. Cl.: F01M 13/04, B04B 5/12

(54) **ZENTRIFUGALABSCHEIDER**
CENTRIFUGAL SEPARATOR
DISPOSITIF DE SÉPARATION CENTRIFUGE

(30) Priorität: 06.11.2008 DE 202008014734 U; 07.08.2009 DE 102009036476
(43) Veröffentlichungstag der Anmeldung: 10.08.2011
(73) Patentinhaber: Hengst GmbH & Co. KG, 48147 Münster (DE)
(72) Erfinder: SCHLAMANN, Guido, 48147 Münster (DE); MENDEL, Frank, 48317 Drensteinfurt (DE); RÖLVER, Martin, 48329 Havixbeck (DE); TORNO, Harald, 48157 Münster (DE)
(74) Vertreter: Linnemann, Winfried
(86) Internationale Anmeldenummer: PCT/EP2009/007927
(87) Internationale Veröffentlichungsnummer: WO 2010/051994

(56) Entgegenhaltungen:
- WO-A1-01/03846
- WO-A1-01/36103
- DE-A1- 10 300 976
- US-A1- 2003 233 939
- US-B2- 7 396 373

## Beschreibung

Die Erfindung betrifft Zentrifugalabscheider zum Abscheiden von Ölnebel aus dem Kurbelgehäuseentlüftungsgas einer Brennkraftmaschine oder zum Abscheiden von festen Verunreinigungen aus dem Schmieröl einer Brennkraftmaschine, wobei die Zentrifugalabscheider einen drehantreibbaren Rotor, ein den Rotor aufnehmendes Gehäuse und einen Drehantrieb für den Rotor aufweisen, wobei der Drehantrieb durch einen Elektromotor gebildet ist, der im Gehäuse angeordnet ist und wobei die Zentrifugalabscheider Mittel zum Kühlen des Elektromotors aufweisen.

Zentrifugalabscheider mit den vorstehend angegebenen Merkmalen sind aus dem Dokument WO 01/03846 A1 bekannt. Aus diesem Dokument geht weiterhin ein Zentrifugalabscheider hervor, bei dem mindestens ein Kühlkörper zum Kühlen des Elektromotors vorgesehen ist. Konkret ist hier gemäß Figur 21 ein Tragkörper vorgesehen, der auf seiner Oberseite eine Platine einer elektronischen Steuereinheit trägt. Mit einem radial nach innen ragenden Vorsprung liegt der Tragkörper am Außenumfang des Ständers des Elektromotors an. Über eine relativ dünne, die Platine außen umgebende Wand steht der Tragkörper mit einem oben auf diese Wand aufgesetzten Kühlkörper in Verbindung. An der Innenseite dieser Wand sind zudem weitere Bauteile befestigt, die zwar nicht konkret beschrieben, aber erkennbar Leistungstransistoren sind, die im Betrieb ebenfalls Wärme abgeben.

Als nachteilig wird bei diesem bekannten Zentrifugalabscheider daher angesehen, dass die Wärmeabfuhr aus dem Ständer des Elektromotors nicht besonders wirkungsvoll ist. Dadurch kann es entweder zu einer Überhitzung des Motors kommen oder die mögliche Leistung des Motors kann nicht voll ausgenutzt werden.

Außerdem ist dieser bekannte Zentrifugalabscheider in seiner Verwendung auf die Abscheidung von Feststoffpartikeln aus einer Flüssigkeit, konkret aus dem Schmieröl einer Brennkraftmaschine, beschränkt. Daher tritt bei dem bekannten Zentrifugalabscheider auch nicht das Problem auf, dass sich aus einem zuströmenden, zu reinigenden Gas schon vor dem Rotor in einem Einlass des Abscheiders Flüssigkeitsanteile absetzen.

Ein weiterer Zentrifugalabscheider ist beispielsweise bekannt aus US 7 396 373 B2. Dieser bekannte Zentrifugalabscheider dient zur Abscheidung von festen und/oder flüssigen Partikeln aus einem Gasstrom. Der Abscheider besitzt einen Rotor, der durch einen Tellerstapel gebildet ist und der in einem Gehäuse angeordnet sowie mittels eines ebenfalls im Gehäuse angeordneten Elektromotors in Drehung versetzbar ist. Der zu reinigende Gasstrom tritt axial in das Gehäuse ein und durchströmt den Rotor in Richtung von radial innen nach radial außen. Die abgeschiedenen Partikel treffen auf die innere Oberfläche einer Umfangswand des Gehäuses des Zentrifugalabscheiders und werden von dort durch Schwerkraftwirkung nach unten in einen separaten Auslass abgeführt. Das gereinigte Gas strömt in Axialrichtung nach oben zu einem dort vorgesehenen Reingasauslass. In dem Bereich des Gehäuses, durch den der Reingasstrom abgeleitet wird, befindet sich auch der Elektromotor für den Antrieb des Rotors.

In der Praxis hat es sich bei Zentrifugalabscheidern der vorstehend beschriebenen Art als Problem erwiesen, dass der Elektromotor für den Antrieb des Rotors zur Überhitzung und dadurch zu Schäden neigt, was die Funktionssicherheit eines solchen Zentrifugalabscheiders beeinträchtigt.

Für die vorliegende Erfindung stellt sich daher die Aufgabe, Zentrifugalabscheider der eingangs genannten Art zu schaffen, die einen dauerhaft zuverlässigen Betrieb gewährleisten, wobei einerseits insbesondere eine widerstandsarme, wirksame Wärmeabfuhr vom Elektromotor erreicht werden soll.

Die Lösung dieser Aufgabe gelingt erfindungsgemäß mit einem Zentrifugalabscheider der eingangs genannten Art, bei dem mindestens ein Kühlkörper als Mittel zum Kühlen des Elektromotors vorgesehen ist und der dadurch gekennzeichnet ist, dass der Kühlkörper mit einem Ständer des Elektromotors verbunden ist oder diesen ausbildet.

Mit den erfindungsgemäß vorgesehenen Mitteln zum Kühlen des Elektromotors wird gewährleistet, dass der Elektromotor im Gehäuse des Zentrifugalabscheiders stets ausreichend gekühlt wird, so dass eine Überhitzung und dadurch verursachte Schäden des Elektromotors vermieden werden. Hierdurch erreicht der Elektromotor eine für die Einsatzzeit des Zentrifugalabscheiders ausreichende Lebensdauer, so dass ein vorzeitiger Ausfall des Elektromotors nicht mehr zu befürchten ist. Zugleich erlauben es die Mittel zum Kühlen, einen Elektromotor mit hoher spezifischer Leistung einzusetzen, was eine geringe Baugröße des Elektromotors für den Antrieb des Rotors ermöglicht. Dadurch, dass der Kühlkörper mit dem Ständer des Elektromotors verbunden ist oder diesen ausbildet, kann die im Elektromotor entstehende Wärme auf möglichst widerstandsarmem Wege abgeführt werden. Der Kühlkörper dient insbesondere dazu, eine vergrößerte Fläche zur Verfügung zu stellen, über welche der Elektromotor die in ihm entstehende Wärme abgeben kann. Außerdem bietet ein Kühlkörper durch die ihm eigene Wärmekapazität eine Aufnahme von Wärme aus dem Elektromotor, um Wärme aus dem Elektromotor abzuführen, bevor dessen Temperatur eine schädliche Höhe erreicht.

Weiter ist dabei bevorzugt vorgesehen, dass der Kühlkörper im Betrieb des Zentrifugalabscheiders von dem Kurbelgehäuseentlüftungsgas oder dem Kühlmittel oder dem Schmieröl oder dem Kraftstoff oder von Kühlluft der Brennkraftmaschine oder von Umgebungsluft überströmbar und/oder durchströmbar ist. Auf diese Weise wird der Kühlkörper seinerseits aktiv gekühlt, was die Kühlwirkung des Kühlkörpers für den Elektromotor weiter steigert.

Zur Erzielung einer wirksamen Wärmeableitung weist der Kühlkörper vorzugsweise mehrere Flügel auf. Die Flügel bieten eine große Fläche, über die Wärme abgegeben werden kann, beispielsweise an das den Zentrifugalabscheider durchströmende, zu reinigende Medium.

In bevorzugter Weiterbildung ist dabei vorgesehen, dass der Kühlkörper rotationssymmetrisch ist und dass die Flügel radial ausgerichtet und über den Umfang des Kühlkörpers verteilt sind.

Aus Stabilitätsgründen und aus Gründen einer guten Wärmeleitfähigkeit ist bevorzugt der Kühlkörper ein einstückiges Metallteil, vorzugsweise ein Druckgussteil aus Leichtmetall, insbesondere Aluminium oder Magnesium.

Insbesondere aus Kosten- und Gewichtsgründen ist bevorzugt das Gehäuse ein einstückiges Kunststoffteil, vorzugsweise ein Spritzgussteil aus einem Thermoplasten, insbesondere Polyamid.

Wenn die Kühlung des Elektromotors durch das den Zentrifugalabscheider durchströmende Gas erfolgt, ist zur Vermeidung einer störenden Verschmutzung des Elektromotors dieser zweckmäßig auf einer Reingasseite des Zentrifugalabscheiders angeordnet.

Im Sinne einer einfachen Montage des Zentrifugalabscheiders und aus thermischen Gründen ist vorzugsweise der Elektromotor an einer von außen zugänglichen, im montierten Zustand außerhalb der zugehörigen Brennkraftmaschine liegenden Oberseite des Zentrifugalabscheiders angeordnet.

Dabei ist bevorzugt weiter vorgesehen, dass der Kühlkörper als ein die Oberseite des Zentrifugalabscheiders bildender Deckel ausgeführt ist. Der Kühlkörper liegt somit außerhalb der Brennkraftmaschine und kann dort z.B. durch Fahrtwind oder ventilierte Kühlluft wirksam gekühlt werden.

Ein weiterer Vorschlag sieht vor, dass der Deckel eine zum Elektromotor gehörende Elektronikeinheit aufnimmt oder enthält. In dieser Ausgestaltung kann Verlustwärme der Elektronikeinheit ebenfalls über den Deckel abgegeben werden.

Um dabei zu vermeiden, dass Wärme aus dem Elektromotor die Elektronikeinheit oder Wärme aus der Elektronikeinheit den Elektromotor zu sehr erwärmt, wird vorgeschlagen, dass der Deckel in zwei thermisch voneinander getrennte Deckelteile unterteilt ist und dass ein erster Deckelteil in wärmeleitender Verbindung mit dem Elektromotor und ein zweiter Deckelteil in wärmeleitender Verbindung mit der Elektronikeinheit steht.

Eine noch bessere thermische Trennung kann dabei dadurch erreicht werden, dass der Elektromotor und die Elektronikeinheit durch ein thermisches Isolationselement voneinander getrennt sind.

Wenn die Umgebungs- oder Kühlluft für die Kühlung nicht ausreicht, dann kann gemäß einem weiteren Vorschlag mit dem Deckel ein Aufsatz mit je einem Zulauf und Ablauf für eine den Deckel überströmende Kühlflüssigkeit verbindbar oder verbunden sein.

Eine Ausgestaltung der Erfindung sieht vor, dass das Gehäuse ein Unterteil mit einem Einlass für dem Rotor zuzuführendes Rohmedium und mit einem Auslass für aus dem Rohmedium abgeschiedenes Medium aufweist, wobei das Unterteil als separates Einzelteil herstellbar und relativ zum übrigen Gehäuse mit diesem in verschiedenen Verdrehstellungen verbindbar, vorzugsweise verschweißbar oder zusammensteckbar, ist. Hierdurch wird auf einfache Weise eine Möglichkeit zur flexiblen Anpassung des Abscheiders an unterschiedliche Einbausituationen geschaffen.

Bei modernen Brennkraftmaschinen wird zunehmend eine Modulbauweise angestrebt und es wird deshalb vorgeschlagen, dass das Gehäuse ohne Unterteil ausgeführt und unter Abdichtung durch Dichtungen in einen Modulsockel, insbesondere eines Ölfiltermoduls, oder in eine Zylinderkopfhaube der Brennkraftmaschine einsteckbar oder einschraubbar ist.

Der Zentrifugalabscheider kann auch als eigenständiges Nebenaggregat einer Brennkraftmaschine ausgeführt und mit der Brennkraftmaschine für sich verbindbar sein. Dazu ist der Zentrifugalabscheider zweckmäßig mit einem Anschlussflansch ausgestattet, mit dem er an einen Modulsockel, insbesondere eines Ölfiltermoduls, oder an eine Zylinderkopfhaube der Brennkraftmaschine anflanschbar ist, wobei durch den Anschlussflansch ein Teil der oder alle benötigten Strömungsverbindungen von und zu der Brennkraftmaschine verlaufen. Statt unmittelbar mit der Brennkraftmaschine kann der Zentrifugalabscheider mittels des Verbindungsflansches auch mit einem Funktionsmodul der Brennkraftmaschine verbunden werden, wobei dann das Funktionsmodul mit der Brennkraftmaschine verbindbar ist.

Da der Elektromotor zum Antrieb des Rotors mit elektrischer Energie versorgt werden muss, wird weiter vorgeschlagen, dass über den Anschlussflansch zugleich eine elektrische Verbindung zur Stromversorgung des Elektromotors herstellbar ist. Dies erleichtert die Montage und bietet eine hohe elektrische Funktionssicherheit, da ein separates Verlegen und Anschließen von externen Stromleitungen entfällt.

Da sich im Betrieb einer Brennkraftmaschine der Volumenstrom des Kurbelgehäuseentlüftungsgases last- und drehzahlabhängig ändert, wird vorgeschlagen, dass die Drehzahl des den Rotor antreibenden Elektromotors nach Maßgabe des Volumenstroms des Kurbelgehäuseentlüftungsgases veränderbar ist. Die Leistung des Abscheiders kann so jeweils dem Bedarf angepasst werden, was den Energieverbrauch und den Verschleiß des Abscheiders reduziert.

Im Folgenden werden Ausführungsbeispiele der Erfindung anhand einer Zeichnung erläutert. Die Figuren der Zeichnung zeigen:
- Figur 1: einen ersten Zentrifugalabscheider in Seitenansicht,
- Figur 2: den Zentrifugalabscheider aus Figur 1 in Unteransicht,
- Figur 3: den Zentrifugalabscheider aus den Figuren 1 und 2 in einem Längsschnitt gemäß der Schnittlinie A-A in Figur 2,
- Figur 4: den Zentrifugallabscheider aus den Figuren 1 und 2 in einem Längsschnitt gemäß der Schnittlinie B-B in Figur 2,
- Figur 5: einen zweiten Zentrifugalabscheider in Außennnsicht,
- Figur 6: den Zentrifugalabscheider aus Figur 5 in einer Unteransicht,
- Figur 7: den Zentrifugalabscheider aus den Figuren 5 und 6 in einem Längsschnitt gemäß der Schnittlinie A-A in Figur 6,
- Figur 8: den Zentrifugalabscheider aus den Figuren 5 und 6 in einem Längsschnitt gemäß der Schnittlinien B-B in Figur 6,
- Figur 9: einen dritten Zentrifugalabscheider in Seitenansicht,
- Figur 10: den Zentrifugalabscheider aus Figur 9 in einer Unteransicht,
- Figur 11: den Zentrifugalabscheider aus den Figuren 9 und 10 im Längsschnitt gemäß der Schnittlinie A-A in Figur 10,
- Figur 12: den Zentrifugalabscheider aus den Figuren 9 und 10 in einem Längsschnitt gemäß der Schnittlinie B-B in Figur 10,
- Figur 13: einen vierten Zentrifugalabscheider in perspektivischer Ansicht,
- Figur 14: den Zentrifugalabscheider aus Figur 13 in einem ersten Längsschnitt,
- Figur 15: den Zentrifugalabscheider aus den Figuren 13 und 14 im einem zweiten, um 90° verdrehten Längsschnitt, und
- Figur 16: einen fünften Zentrifugalabscheider in einem Längsschnitt.

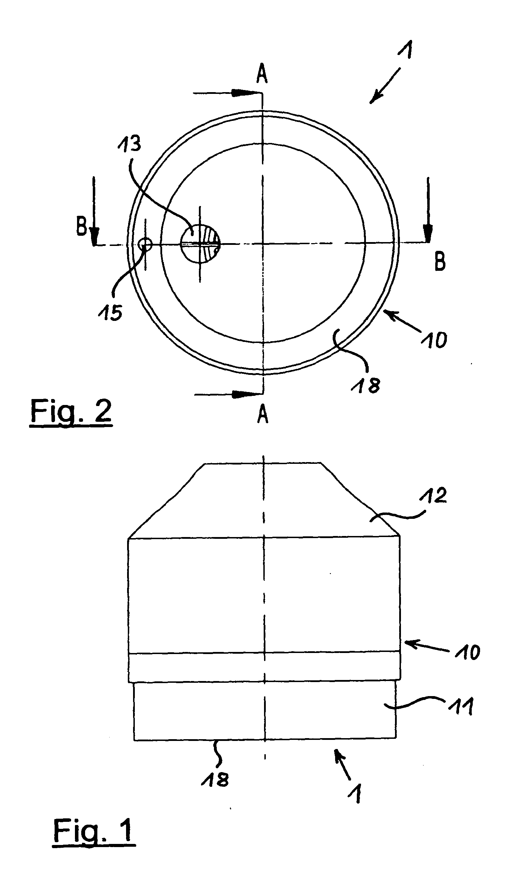

Figur 1 zeigt einen ersten Zentrifugalabscheider 1 in Seitenansicht, wobei ein Gehäuse 10 des Abscheiders 1 sichtbar ist, welches ein im Wesentlichen zylindrisches Unterteil 11 und einen in seiner Grundform ebenfalls zylindrischen, im oberen Teil kegelstumpfförmigen Deckel 12 umfasst. Die Unterseite des Unterteils 11 bildet einen Anschlussflansch 18, mit dem der Zentrifugalabscheider 1 mit einer zugehörigen Brennkraftmaschine, die hier nicht dargestellt ist, oder mit einem zu der Brennkraftmaschine gehörenden Funktionsmodul verbindbar ist.

Figur 2 zeigt den Zentrifugalabscheider 1 aus Figur 1 in einer Unteransicht. Radial außen liegt an der nun sichtbaren Seite des Gehäuses 10 der Anschlussflansch 18, in dessen Verlauf in Figur 2 links ein Auslass 15 für in dem Zentrifugalabscheider 1 abgeschiedenes Medium, zum Beispiel Schmieröl aus dem Kurbelgehäuseentlüftungsgas einer Brennkraftmaschine, sichtbar ist. Radial nach innen versetzt von dem Auslass 15 liegt ein Einlass 13 für das im Zentrifugalabscheider 1 zu reinigende Rohmedium, beispielsweise das Kurbelgehäuseentlüftungsgas der zugehörigen Brennkraftmaschine. In einem mit der Brennkraftmaschine oder einem Funktionsmodul der Brennkraftmaschine verflanschten Zustand des Zentrifugalabscheiders 1 steht der Einlass 13 für das Rohmedium mit dem Kurbelgehäuse der Brennkraftmaschine in Strömungsverbindung; der Auslass 15 steht dann beispielsweise mit einem Ölsumpf der Brennkraftmaschine in Verbindung.

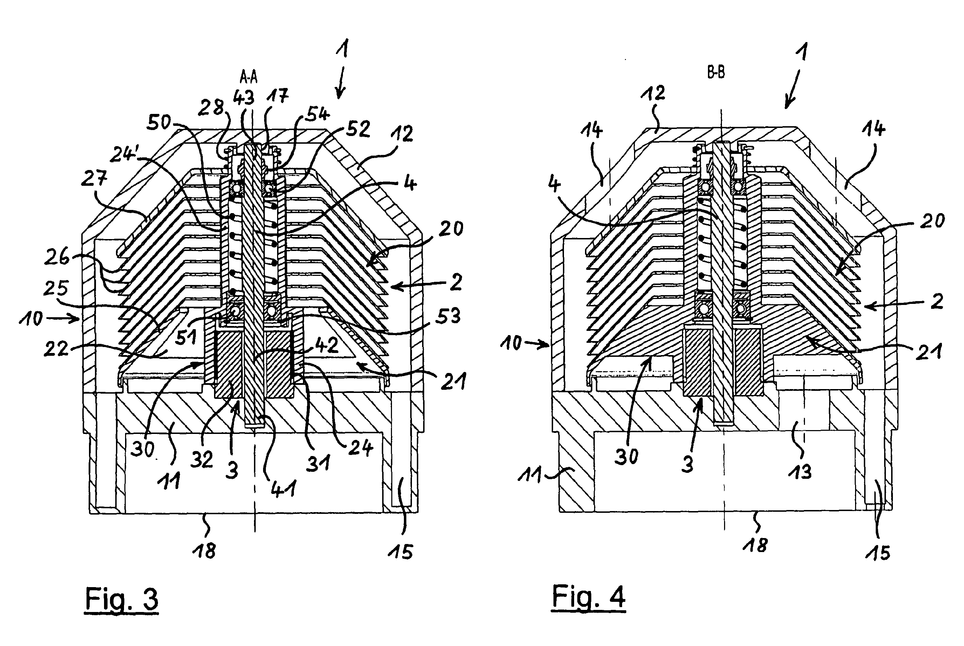

Anhand der in den Figuren 3 und 4 dargestellten Längsschnitte des Zentrifugalabscheiders 1 gemäß den Schnittlinien A-A und B-B in Figur 2 wird der innere Aufbau des Zentrifugalabscheiders 1 deutlich. Im Inneren des Gehäuses 10 ist ein Rotor 2 auf einer Achse 4 mit Hilfe von zwei Lagern 51, 52 drehbar gelagert. Der Rotor 2 umfasst dabei einen Abscheiderteil 20 und einen Trägerteil 21. Der Abscheiderteil 20 besteht aus einem Tellerstapel 26 an sich bekannter Ausführung, wobei der Tellerstapel 26 auf einer Tellerauflage 25 aufliegt und nach oben hin durch einen Deckteller 27 abgedeckt ist. Die Anordnung aus Tellerauflage 25, Tellerstapel 26 und Deckteller 27 wird durch eine Schraubenfeder 28 zusammengedrückt, so dass die Anordnung zueinander eine stabile Lage einnimmt. Der Trägerteil 21 besitzt einen nach oben aufragenden hülsenförmigen Abschnitt 24', auf den der Abscheiderteil 20 von oben her aufgesteckt und verdrehfest gesichert ist.

Zum Antreiben des Rotors 2 dient hier ein Elektromotor 3, der unterhalb des Rotors 2 angeordnet ist. Der Elektromotor 3 besitzt einen den unteren Abschnitt 42 der Achse 4 umgebenden Ständer 32, zum Beispiel eine elektromagnetische Spulenanordnung. Um den Ständer 32 herum ist ein Läufer 31 angeordnet, der beispielsweise durch eine Magnethülse gebildet ist. Der Läufer 31 ist verdrehfest mit einem hülsenförmigen Abschnitt 24 des Trägerteils 21 des Rotors 2 verbunden. Bei Versorgung des Elektromotors 3 mit elektrischer Energie wird auf diese Weise der Rotor 2 in die für seine Funktion erforderliche Rotation um die Achse 4 versetzt.

Um die in dem Elektromotor 3 bei dessen Betrieb entstehende Wärme abzuführen und eine Überhitzung und Schädigung des Elektromotors 3 zu vermeiden, ist der Trägerteil 21 des Rotors 2 hier gleichzeitig als Kühlkörper 30 für den Elektromotor 3 ausgebildet. Der Trägerteil 21 besitzt dazu neben dem in unmittelbarem, wärmeleitendem Kontakt mit dem Elektromotor 3 stehenden hülsenförmigen Abschnitt 24 mehrere in Umfangsrichtung voneinander beabstandete Flügel 22, die die Fläche des Trägerteils 21 vergrößern und somit einen wirksamen Kühlkörper 30 bilden. Bei der Rotation des Rotors 2 wird der Kühlkörper 30 von dem den Zentrifugalabscheider 1 durchströmenden, zu reinigenden Medium überströmt, wodurch die von dem Elektromotor 3 abgegebene Wärme aus diesem abtransportiert und an das den Zentrifugalabscheider 1 durchströmende Medium übertragen wird.

Die Achse 4 ist mit ihrem unteren Ende 41 mit dem Unterteil 11 des Gehäuses 10 lagefest verbunden. Das obere Ende 43 der Achse 4 ist in einer Zentrieraufnahme 17 an der Unterseite des Deckels 12 zentriert.

Mittels einer zwischen den Lagern 51 und 52 angeordneten Schraubendruckfeder 50 wird ein Spiel in Längsrichtung zwischen den Lagern 51, 52 ausgeglichen, wobei hier das eine Lager 51 ein Loslager und das andere Lager 52 ein Festlager ist. Das untere Lager 51 ist dabei durch einen darunter angeordneten, mit der Achse 4 verbundenen Sprengring 53 in seiner Beweglichkeit nach axial unten begrenzt. Oberhalb des oberen Lagers 52 ist auf dem oberen Bereich 43 der Achse 4 eine Sicherungshülse 54 angebracht.

Zur Zuführung des im Zentrifugalabscheiders 1 zu reinigenden Mediums, wie Kurbelgehäuseentlüftungsgas, dient der in Figur 4 sichtbare Einlass 13 im oberen Bereich des Unterteils 11, durch welchen das Medium in den Innenraum des Deckels 12 zur Unterseite des Rotors 2 gelangt. Vor dort strömt das zu reinigende Medium in bekannter Weise im Rotor in Axialrichtung nach oben und verteilt sich so auf die Zwischenräume zwischen den Tellern des Tellerstapels 26. Durch den rotierenden Abscheiderteil 20 gelangt das zu reinigende Medium in Radialrichtung nach außen, wobei durch dabei entstehende Zentrifugalkräfte flüssige und/oder feste Partikel aus dem Medium entfernt werden. Das gereinigte Medium strömt dann radial außen von dem Rotor 2 nach oben und verlässt den Zentrifugalabscheider 1 durch die in Figur 4 sichtbaren Auslässe 14, die im Deckel 12 angebracht sind. Die abgeschiedenen Partikel gelangen unter Schwerkrafteinfluss in den Auslass 15 und werden von dort abgeführt, beispielsweise als abgeschiedenes Schmieröl in den Ölsumpf einer zugehörigen Brennkraftmaschine, mit der der Zentrifugalabscheider 1 mittels des Verbindungsflansches 18 verbindbar bzw. verbunden ist.

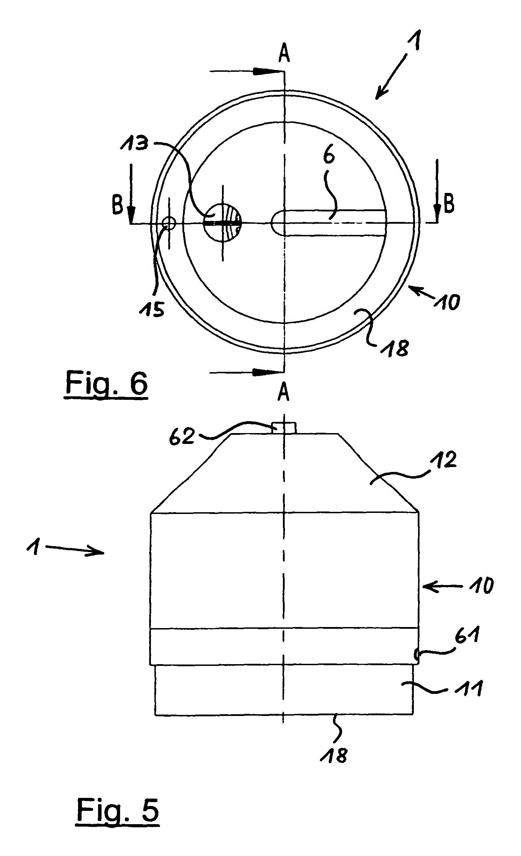

Figur 5 zeigt einen zweiten Zentrifugalabscheider 1 in Seitenansicht. In seiner äußeren Form entspricht dabei der Zentrifugalabscheider 1 im Wesentlichen dem Beispiel gemäß Figur 1. Unterschiedlich ist bei dem Abscheider 1 nach Figur 5, dass hier ein eigenes Kühlmittel durch den Zentrifugalabscheider 1 führbar ist. Hierzu ist im Unterteil 11 gemäß Figur 5 an der rechten Seite ein Kühlmittelkanalanschluss 61 ausgebildet. Dieser Anschluss 61 steht mit einem in Figur 5 nicht sichtbaren, im Inneren des Zentrifugalabscheiders 1 verlaufenden Kühlmittelkanal in Verbindung. Das andere Ende des Kühlmittelkanals mündet in einen zweiten Kühlmittelkanalanschluss 62, der hier zentral an der Oberseite des Deckels 12 ausgebildet ist. Über die Anschlüsse 61 und 62 ist mittels nicht dargestellter Leitungen ein separates Kühlmittel zu- und abführbar, z.B. Kühlwasser oder Schmieröl oder Kraftstoff der zugehörigen Brennkraftmaschine.

An der Unterseite des Gehäuses 10 bzw. dessen Unterteils 11 ist wieder der Verbindungsflansch 18 vorgesehen.

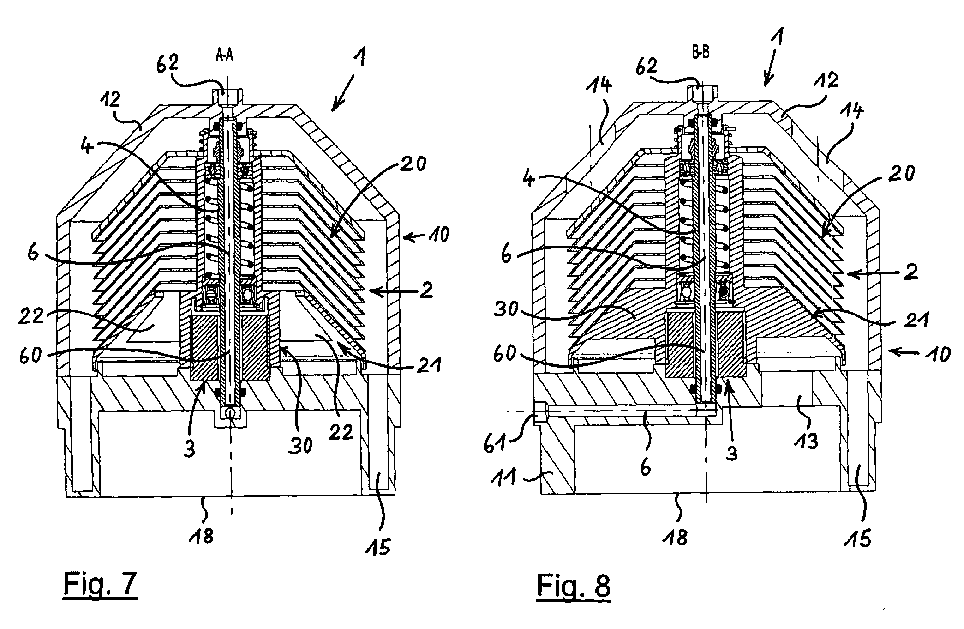

In der in Figur 6 dargestellten Unteransicht des Zentrifugalabscheiders 1 aus Figur 5 wird die Anordnung des Einlasses 13 für das Rohmedium und des Auslasses 15 für das abgeschiedene Medium sichtbar. Rechts von dem Rohmediumeinlass 13 ist hier der Verlauf eines Abschnitts des Kühlmittelkanals 6 sichtbar, der zu einer aktiven Kühlung des Elektromotors des Zentrifugalabscheiders 1 dient, wie aus den Figuren 7 und 8 deutlicher wird.

Die Figuren 7 und 8 zeigen den Zentrifugalabscheider aus den Figuren 5 und 6 in zwei Längsschnitten. Der Rotor 2 im Inneren des Gehäuses 10 entspricht dabei dem des Zentrifugalabscheiders 1 nach den Figuren 1 bis 4; auf deren Beschreibung wird diesbezüglich verweisen.

Unterschiedlich zu dem zuvor beschriebenen Ausführungsbeispiel ist bei dem Zentrifugalabscheider 1 nach den Figuren 5 bis 8 der Kühlmittelkanal 6. Wie die Figur 8 zeigt, beginnt der Kühlmittelkanal 6 an dem Kühlmittelkanalanschluss 61 radial außen am Unterteil 11 des Gehäuses 10 und läuft von dort zunächst radial nach innen bis zur Mitte des Unterteils 11. Dort trifft der Kühlmittelkanal 6 auf die Achse 4, die hier als Hohlachse ausgeführt ist, so dass der Kühlmittelkanal 6 in seinem weiteren Verlauf in Axialrichtung nach oben durch die Achse 4 verläuft. Im Zentrum des Deckels 12 liegt der zweite Kühlmittelkanalanschluss 62, durch den das Kühlmittel abgeführt werden kann. Ein in der Achse 4 zentral durch den Elektromotor 3 verlaufender Abschnitt des Kühlmittelkanals 6 bildet eine Kühlzone 60, in der Wärme aus dem Elektromotor 3 an das den Kühlmittelkanal 6 durchströmende Kühlmittel abgegeben und dann mit diesem abgeführt werden kann. Die Strömungsrichtung des Kühlmittels im Kühlmittelkanal 6 kann natürlich auch umgekehrt verlaufen.

In seinen weiteren Einzelteilen entspricht der Zentrifugalabscheider 1 gemäß den Figuren 5 bis 8 dem ersten Ausführungsbeispiel gemäß den Figuren 1 bis 4; auf deren Beschreibung wird verwiesen.

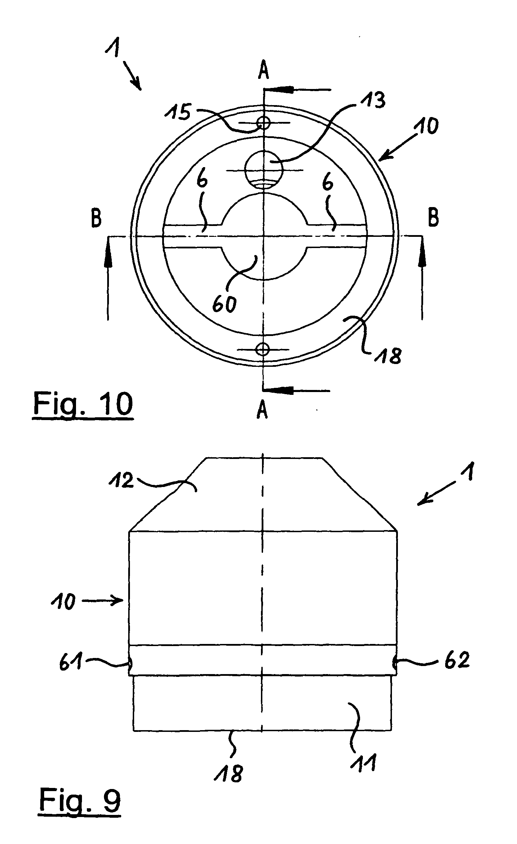

In Figur 9 ist ein drittes Ausführungsbeispiel des Zentrifugalabscheiders 1 in Seitenansicht dargestellt. Die Grundform des Zentrifugalabscheiders 1 gemäß Figur 9 entspricht wieder derjenigen der Ausführungsbeispiele nach den Figuren 1 und 5.

Auch bei dem Zentrifugalabscheider 1 gemäß Figur 9 ist in dessen Innerem ein Kühlmittelkanal vorgesehen. Die beiden Kühlmittelkanalanschlüsse 61 und 62 zur Zuführung und Abführung des Kühlmittels sind hier einander diametral gegenüberliegend am Unterteil 11 in dessen Umfangsfläche angeordnet.

Die Unteransicht gemäß Figur 10 zeigt die Anordnung des Einlasses 13 für das Rohmedium und des Auslasses 15 für das abgeschiedene Medium bei dem Abscheider 1 gemäß Figur 9. Weiterhin wird in Figur 10 der Verlauf des Kühlmittelkanals 6 mit der hier in Radialrichtung gesehen zentralen Kühlzone 60 erkennbar.

Die Unterseite des Gehäuses 10 bildet auch hier wieder den Anschlussflansch 18 zur Verbindung des Zentrifugalabscheider 1 mit einer zugehörigen Brennkraftmaschine oder einem Funktionsmodul der Brennkraftmaschine.

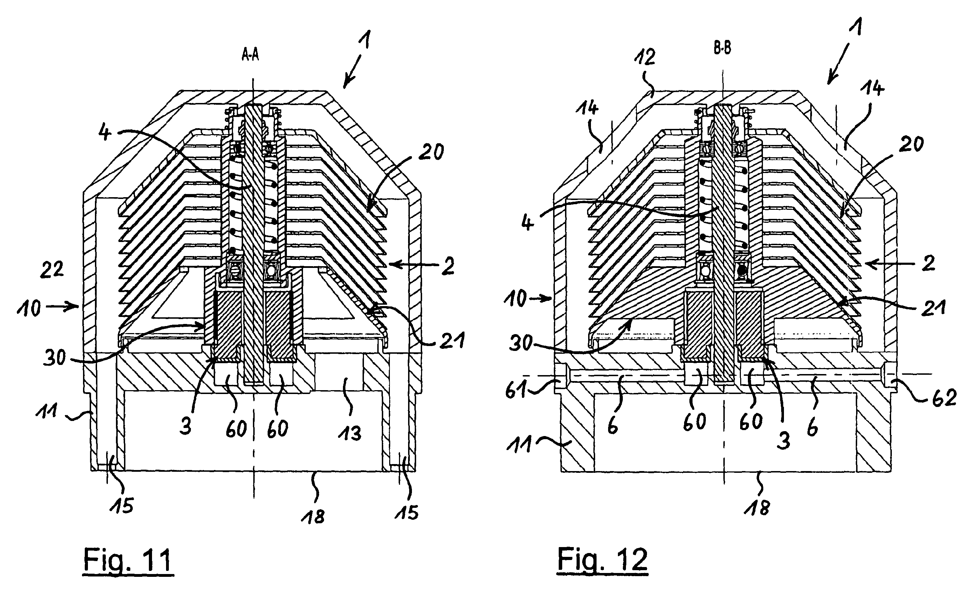

Die zwei Längsschnitte gemäß den Schnittlinien A-A und B-B in Figur 10 sind in den Figuren 11 und 12 dargestellt. Der Rotor 2 des Zentrifugalabscheiders 1 ist auch bei diesem dritten Ausführungsbeispiel übereinstimmend mit den Rotoren 2 der beiden zuvor beschriebenen Ausführungsbeispielen ausgeführt; auf die diesbezügliche vorhergehende Beschreibung wird verwiesen.

In Figur 11 ist der Einlass 13 zur Zuführung des zu reinigenden Rohmediums zum Rotor 2 sichtbar. Radial außen im Unterteil 11 ist der Auslass 15 für das abgeschiedene Medium sichtbar. Die Unterseite des Unterteils 11 bildet wieder den Anschlussflansch 18.

Figur 12 zeigt den Verlauf des Kühlmittelkanals 6 durch das Unterteil 11 des Gehäuses 10. Links an dem Unterteil 11 liegt an dessen Umfangsfläche der Kühlmittelkanalanschluss 61 zur Zuführung des Kühlmittels. Von dort führt der Kühlmittelkanal 6 in Radialrichtung nach innen, wo er in eine ringförmige Kühlzone 60 mündet. An der gegenüberliegenden Seite des Unterteils 11 befindet sich der zweite Kühlmittelkanalanschluss 62, der mit einem von der Kühlzone 60 nach radial außen verlaufenden zweiten Abschnitt des Kühlmittelkanals 6 verbunden ist und zur Abführung des Kühlmittels dient.

Die ringförmige Kühlzone 60 des Kühlmittelkanals 6 verläuft unterhalb des Elektromotors 3 und das Kühlmedium kann somit Wärme aus dem Elektromotor 3 wirksam aufnehmen und abführen. Zur Vermeidung von Schäden am Elektromotor durch das Kühlmedium ist hier selbstverständlich eine entsprechende Abdichtung vorgesehen.

Zur Abführung des gereinigten Mediums aus dem Zentrifugalabscheider 1 dienen die beiden in Figur 12 sichtbaren Auslässe 14 an der Oberseite des Deckels 12.

In seinen weiteren Teilen entspricht der Zentrifugalabscheider 1 den zuvor beschriebenen Ausführungsbeispielen, auf deren Beschreibung verwiesen wird.

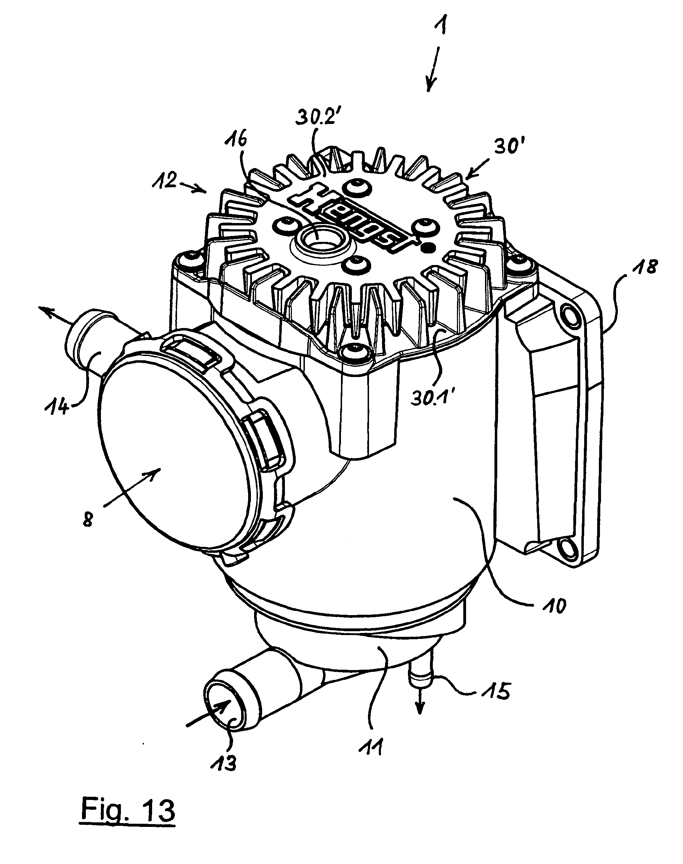

Figur 13 zeigt einen weiteren Zentrifugalabscheider 1, hier in perspektivischer Ansicht, der für die Entölung von Kurbelgehäuseentlüftungsgas einer Brennkraftmaschine vorgesehen ist. Es ist ein Gehäuse 10 des Abscheiders 1 von außen sichtbar, welches eine im Wesentlichen zylindrische Form aufweist. Nach unten ist das Gehäuse 10 durch ein Unterteil 11 abgeschlossen. Oberseitig sitzt auf dem Gehäuse 10 ein Deckel 12. An der in Figur 13 nach rechts hinten weisenden Seite des Gehäuses 10 ist ein Anschlussflansch 18 angeformt, mit dem der Zentrifugalabscheider 1 mit einer zugehörigen Brennkraftmaschine oder mit einem zu der Brennkraftmaschine gehörenden Funktionsmodul, die hier nicht dargestellt sind, verbindbar ist.

Am Unterteil 11 ist ein Einlass 13 für das Rohmedium angeformt, wobei der Einlass 13 hier als radial verlaufender Schlauchanschlussstutzen ausgebildet ist.

Axial nach unten weisend ist ein Auslass 15 für abgeschiedenes Medium am Unterteil 11 vorgesehen, wobei der Auslass 15 hier ebenfalls als Schlauchanschlussstutzen ausgebildet ist.

Am Umfang des Gehauses 10 ist ein Druckregelventil 8 angeordnet, durch das das im Abscheider gereinigte Gas zum Auslass 14 für das Reinmedium strömt. Auch der Auslass 14 ist als Schlauchanschlussstutzen ausgeführt. Das Druckregelventil 8 dient zur Regelung des Drucks im Kurbelgehäuse der zugehörigen Brennkraftmaschine.

Der Deckel 12 ist hier als Kühldeckel 30' ausgebildet und besitzt zu diesem Zweck an seinem Umfang eine Anzahl von Kühlrippen oder-flügeln. Dabei ist der Kühldeckel 30' in zwei thermisch voneinander getrennte Deckelteile 30.1' und 30.2' unterteilt. Der eine Deckelteil 30.1' ist dabei wärmeleitend mit einem im oberen Bereich des Inneren des Gehäuses 10 angeordneten, hier nicht sichtbaren Elektromotor-Kühlkörper oder anderen wärmeabgebenden Teil eines Elektromotors verbunden. Der andere Deckelteil 30.2' ist wärmeleitend mit einer ebenfalls im oberen Bereich des Inneren des Gehäuses 10 angeordneten, hier nicht sichtbaren Elektronikeinheit des Elektromotors verbunden. Somit werden hier der Elektromotor und dessen Elektronikeinheit weitgehend ohne gegenseitige Beeinflussung gekühlt.

In der Oberseite des Deckels 12 bzw. 30' ist schließlich noch ein elektrischer Anschluss 16 vorgesehen, z.B eine Buchse für ein Stromversorgungskabel des Elektromotors.

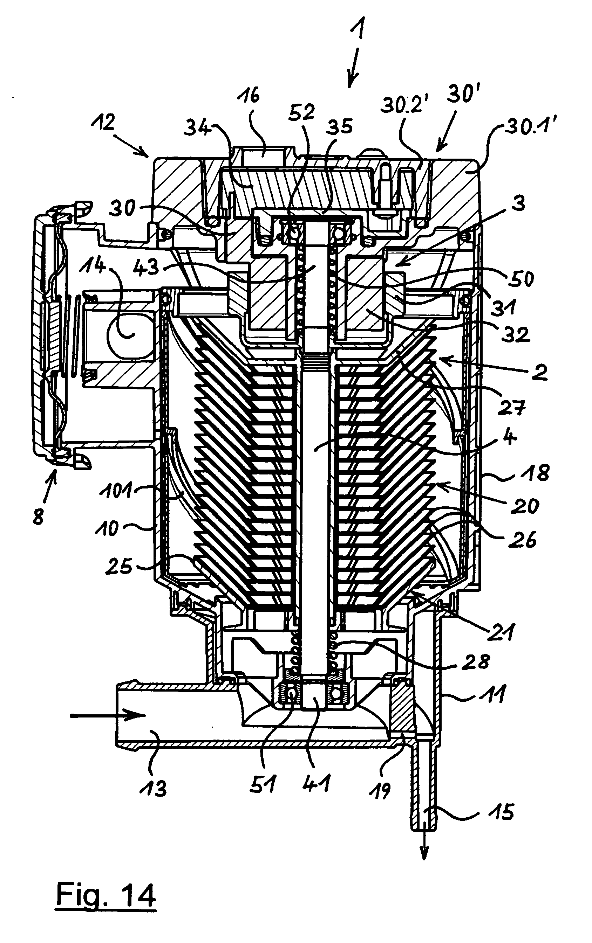

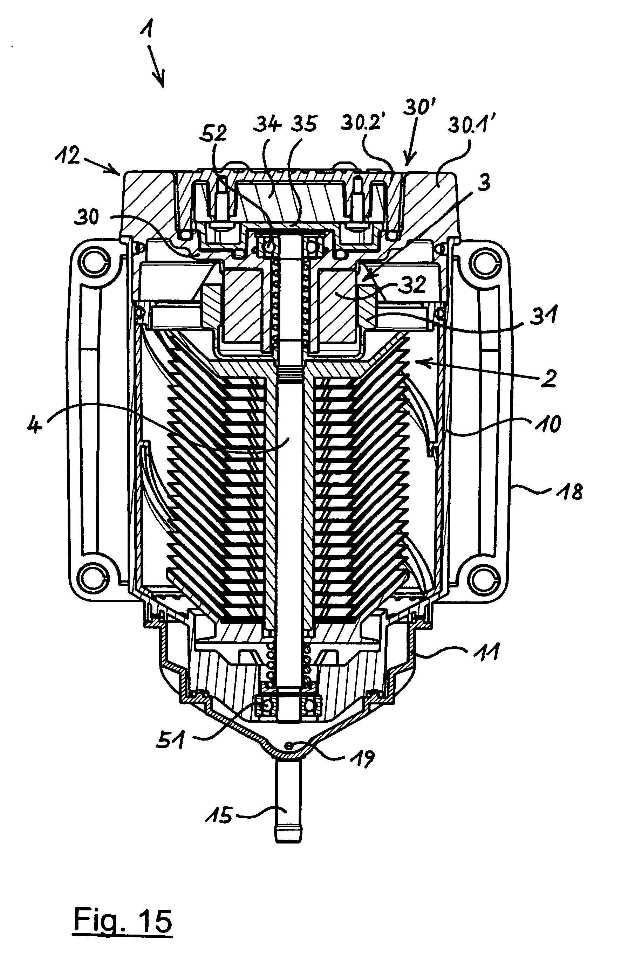

Anhand der in den Figuren 14 und 15 dargestellten Längsschnitte des Zentrifugalabscheiders 1 gemäß Figur 13 wird dessen innerer Aufbau erkennbar. Im Inneren des Gehäuses 10 ist ein Rotor 2 mit einer Achse 4 mit Hilfe von zwei Lagern 51, 52 drehbar gelagert. Der Rotor 2 umfasst dabei einen Abscheiderteil 20 und einen Trägerteil 21. Der Abscheiderteil 20 besteht aus einem Tellerstapel 26 an sich bekannter Ausführung, wobei der Tellerstapel 26 auf einer Tellerauflage 25 aufliegt und nach oben hin durch einen Deckteller 27 abgedeckt ist. Die Anordnung aus Tellerauflage 25, Tellerstapel 26 und Deckteller 27 wird von unten her durch eine Schraubenfeder 28 zusammengedrückt, so dass die Anordnung zueinander eine stabile Lage einnimmt.

Zum Antreiben des Rotors 2 dient hier ein Elektromotor 3, der oberhalb des Rotors 2 angeordnet ist. Der Elektromotor 3 besitzt einen den oberen Abschnitt 43 der Achse 4 umgebenden Ständer 32, zum Beispiel eine elektromagnetische Spulenanordnung. Um den Ständer 32 herum ist ein Läufer 31 angeordnet, der beispielsweise durch eine Magnethülse gebildet ist. Der Läufer 31 ist hier verdrehfest mit dem oberen Abschnitt 43 der Achse 4 verbunden. Bei Versorgung des Elektromotors 3 mit elektrischer Energie wird auf diese Weise der Rotor 2 zusammen mit der im Gehäuse 10 in den Lagern 51 und 52 drehbar gelagerten Achse 4 in die für seine Funktion erforderliche Rotation versetzt.

Um die in dem Elektromotor 3 bei dessen Betrieb entstehende Wärme abzuführen und eine Überhitzung und Schädigung des Elektromotors 3 zu vermeiden, ist hier der Ständer 32 des Motors 3 mit einem Kühlkörper 30 für den Elektromotor 3 ausgebildet. Der Kühlkörper 30 steht dazu mit dem Deckelteil 30.1' in wärmeleitendem Kontakt oder ist mit diesem einstückig ausgebildet. Im Betrieb des Motors 3 wird die von dem Elektromotor 3 abgegebene Wärme aus diesem durch den Kühlkörper 30 und den Deckelteil 30.1' abtransportiert und an die den Deckelteil 30.1' umgebende oder umströmende Luft übertragen.

Über dem Motor 3 ist dessen Elektronikeinheit 34 angeordnet, die ebenfalls im Betrieb Verlustwärme produziert. Zu deren Abführung dient der zweite Deckelteil 30.2', der einen radial inneren Teil des Kühldeckels 30' bildet und der in wärmeleitendem Kontakt mit der Elektronikeinheit 34 steht.

Die Achse 4 ist mit ihrem unteren Ende 41 in dem unteren Lager 51 im Unterteil 11 des Gehäuses 10 drehbar gelagert. In ihrem oberen Bereich 43 ist die Achse 4 in dem oberen Lager 52 drehbar gelagert. Mittels einer unter dem Lager 52 angeordneten Schraubendruckfeder 50 wird ein Spiel in Längsrichtung zwischen den Lagern 51 und 52 ausgeglichen, wobei hier das eine Lager ein Loslager und das andere Lager ein Festlager ist.

Zur Zuführung des im Zentrifugalabscheiders 1 zu reinigenden Mediums, wie Kurbelgehäuseentlüftungsgas einer Brennkraftmaschine, dient der in Figur 14 sichtbare Einlass 13 im Unterteil 11, durch welchen das Medium in den Innenraum des Unterteils 12 und zur Unterseite des Rotors 2 gelangt. Vor dort strömt das zu reinigende Medium im Rotor 2 in Axialrichtung nach oben und verteilt sich auf die Zwischenräume zwischen den Tellern des Tellerstapels 26. Durch den rotierenden Abscheiderteil 20 gelangt das zu reinigende Medium in Radialrichtung nach außen, wobei durch dabei entstehende Zentrifugalkräfte flüssige und/oder feste Partikel aus dem Medium entfernt werden. Das gereinigte Medium strömt dann radial außen von dem Rotor 2 nach oben und verlässt den Zentrifugalabscheider 1 durch die in Figur 14 sichtbaren Auslass 14, der in dem seitlich am Gehäuse 10 angebrachten Druckregelventil 8 liegt. Die abgeschiedenen Partikel gelangen unter Schwerkrafteinfluss in den Auslass 15 und werden von dort abgeführt, beispielsweise als abgeschiedenes Schmieröl in den Ölsumpf einer zugehörigen Brennkraftmaschine zurückgeführt.

Wie schon beschrieben, besitzt das Gehäuse 10 das Unterteil 11 mit dem Einlass 13 für dem Rotor 2 zuzuführendes Rohmedium und mit dem Auslass 15 für aus dem Rohmedium abgeschiedenes Medium. Zwischen einem im Einbauzustand tiefsten Bereich des Einlasses 13 und dem Auslass 15 ist hier ein als oder mit einer Drossel ausgebildeter, zum Auslass 15 nicht ansteigender Verbindungskanal 19 vorgesehen. Der Verbindungskanal 19 dient zum Ableiten von Flüssigkeiten, die sich schon im Einlass 13 aus einem dem Abscheider 1 zuströmenden Gas niederschlagen und sammeln. Da der Verbindungskanal 19 nur einen kleinen Querschnitt hat, stört er die Gasströmung im Abscheider 1 nicht.

Weiterhin sind auf einer den Rotor 2 umgebenden Innenumfangsfläche des Gehäuses 10 mehrere Flüssigkeitsleitrinnen 101 angeordnet ist, die schraubenlinienförmig in Drehrichtung des Rotors 2 gesehen nach unten verlaufen und die nach unten hin offen sind. Im Querschnitt gesehen sind die Flüssigkeitsleitrinnen 101 durch L-Profile mit zunächst radial nach innen und dann nach unten verlaufenden Schenkeln gebildet. Diese Flüssigkeitsleitrinnen 101 nehmen bei einer Gasreinigung die sich auf der Innenumfangsfläche des Gehäuses 10 niederschlagende Flüssigkeit auf und leiten sie, unterstützt durch die Schwerkraft und durch die Rotation des Rotors 2 und die dadurch erzeugte rotierende Gasströmung, entlang der Schraubenlinie nach unten, von wo aus die Flüssigkeit aus dem Abscheider 10 durch den Auslass 15 abgeführt wird.

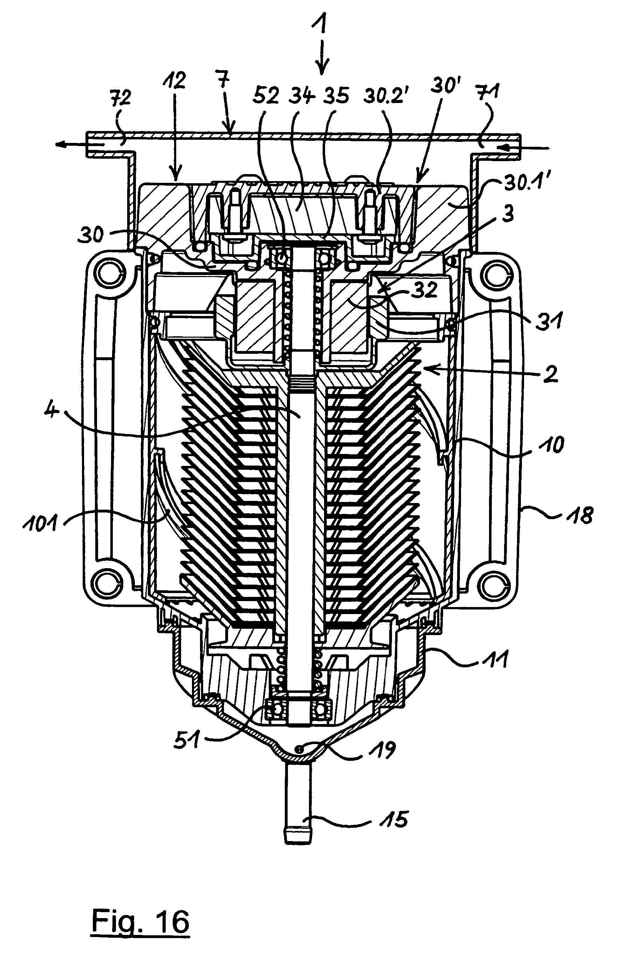

Die Figur 16 zeigt schließlich eine Ausführung des Zentrifugalabscheiders 1, der im Wesentlichen der Ausführung nach den Figuren 13 bis 15 entspricht. Unterschiedlich ist, dass der Abscheider 1 nach Figur 16 im Bereich seines Kühldeckels 30' einen Aufsatz 7 trägt, der zur Kühlung der Deckelteile 30.1' und 30.2' mittels eines durch den Aufsatz 7 geleiteten fluiden Kühlmediums dient. Dazu hat der Aufsatz 7 an seiner einen Seite einen Zulauf 71 und diametral gegenüber einen Ablauf 72 für das fluide Kühlmedium. Das Kühlmedium kann z.B. Kühlwasser der zugehörigen Brennkraftmaschine sein und der Aufsatz 7 kann über seinen Zulauf 71 und Ablauf 72 mittels Verbindungsleitungen in den Kühlwasserkreislauf eingefügt sein.

In seinen weiteren Teilen entspricht der Zentrifugalabscheider 1 nach Figur 16 dem Beispiel nach den Figuren 13 bis 15 und es wird daher auf deren Beschreibung verwiesen.

## Patentansprüche

1. Zentrifugalabscheider (1) zum Abscheiden von Ölnebel aus dem Kurbelgehäuseentlüftungsgas einer Brennkraftmaschine oder zum Abscheiden von festen Verunreinigungen aus dem Schmieröl einer Brennkraftmaschine, wobei der Zentrifugalabscheider (1) einen drehantreibbaren Rotor (2), ein den Rotor (2) aufnehmendes Gehäuse (10) und einen Drehantrieb für den Rotor (2) aufweist, wobei der Drehantrieb durch einen Elektromotor (3) gebildet ist, der im Gehäuse (10) angeordnet ist, wobei der Zentrifugalabscheider (1) Mittel zum Kühlen des Elektromotors (3) aufweist und wobei mindestens ein Kühlkörper (30) als Mittel zum Kühlen des Elektromotors (3) vorgesehen ist,
**dadurch gekennzeichnet,**
**dass** der Kühlkörper (30) direkt mit einem Ständer des Elektromotors (3) verbunden ist oder diesen ausbildet.

2. Zentrifugalabscheider nach Anspruch 1, **dadurch gekennzeichnet, dass** der Kühlkörper (30) im Betrieb des Zentrifugalabscheiders (1) von dem Kurbelgehäuseentlüftungsgas oder dem Kühlmittel oder dem Schmieröl oder dem Kraftstoff oder von Kühlluft der Brennkraftmaschine oder von Umgebungsluft überströmbar und/oder durchströmbar ist.

3. Zentrifugalabscheider nach Anspruch 1 oder 2, **dadurch gekennzeichnet, dass** der Kühlkörper (30) mehrere Flügel (22) aufweist.

4. Zentrifugalabscheider nach Anspruch 3, **dadurch gekennzeichnet, dass** der Kühlkörper (30) rotationssymmetrisch ist und dass die Flügel (22) radial ausgerichtet und über den Umfang des Kühlkörpers (30) verteilt sind.

5. Zentrifugalabscheider nach einem der Ansprüche 1 bis 4, **dadurch gekennzeichnet, dass** der Kühlkörper (30) ein einstückiges Metallteil, vorzugsweise ein Druckgusstell aus Leichtmetail, insbesondere Aluminium oder Magnesium, ist.

6. Zentrifugalabscheider nach einem der Ansprüche 1 bis 5, **dadurch gekennzeichnet, dass** das-Gehäuse (10) ein einstückiges Kunststoffteil, vorzugsweise ein Spritzgusstell aus einem Thermoplasten, insbesondere Polyamid, ist.

7. Zentrifugalabschelder nach einem der Ansprüche 1 bis 6, **dadurch gekennzeichnet, dass** der Elektromotor (3) auf einer Reingasseite des Zentritugalabschelders (1) angeordnet ist.

8. Zentrifugalabscheider nach einem der Ansprüche 1 bis 7, **dadurch gekennzeichnet, dass** der Elektromotor (3) an einer von außen zugänglichen, im montierten Zustand außerhalb der zugehörigen Brennkraftmaschine liegenden Oberseite des Zentrifugalabscheiders (1) angeordnet ist.

9. Zentrifugalabscheider nach Anspruch 8, **dadurch gekennzeichnet, dass** der Kühlkörper (30) als ein die Oberseite des Zentrifugalabscheiders (1) bildender Deckel (30') ausgeführt Ist.

10. Zentrifugalabscheider nach Anspruch 9, **dadurch gekennzeichnet, dass** der Deckel (30') eine zum Elektromotor (3) gehörende Elektronikeinheit (34) aufnimmt oder enthält.

11. Zentrifugalabscheider nach Anspruch 10, **dadurch gekennzeichnet, dass** der Deckel (30') in zwei thermisch voneinander getrennte Deckelteile (30.1', 30.2') unterteilt ist und dass ein erster Deckelteil (30.1') in wärmeleitender Verbindung mit dem Elektromotor (3) und ein zweiter Deckelteil (30.2') in wärmeleitender Verbindung mit der Elektronikeinheit (34) steht.

12. Zentrifugalabscheider nach Anspruch 10 oder 11, **dadurch gekennzeichnet, dass** der Elektromotor (3) und die Elektronikeinheit (34) durch ein thermisches Isolationselement (35) voneinander getrennt sind.

13. Zentrifugalabscheider nach einem der Ansprüche 9 bis 12, **dadurch gekennzeichnet, dass** mit dem Deckel (30') ein Aufsatz (7) mit je einem Zulauf (71) und Ablauf (72) für eine den Deckel (30') überströmende Kühlflüssigkeit verbindbar oder verbunden ist.

14. Zentrifugalabscheider nach einem der Ansprüche 1 bis 13, **dadurch gekennzeichnet, dass** das Gehäuse (10) ein Unterteil (11) mit einem Einlass (13) für dem Rotor (2) zuzuführendes Rohmedium und mit einem Auslass (15) für aus dem Rohmedium abgeschiedenes Medium aufweist, wobei das Unterteil (11) als separates Einzelteil herstellbar und relativ zum übrigen Gehäuse (10) mit diesem in verschiedenen Verdrehstellungen verbindbar, vorzugsweise verschweißbar oder zusammensteckbar, ist.

15. Zentrifugalabscheider nach einem der Ansprüche 1 bis 13, **dadurch gekennzeichnet, dass** das Gehäuse (10) ohne Unterteil (11) ausgeführt und unter Abdichtung durch Dichtungen in einen Modulsockel, insbesondere eines Ölfiltermoduls, oder in eine Zylinderkopfhaube der Brennkraftmaschine einsteckbar oder einschraubbar ist.

16. Zentrifugalabscheider nach einem der Ansprüche 1 bis 15, **dadurch gekennzeichnet, dass** ein Anschlusssflansch (18) vorgeschen ist, mit dem der Zentrifugalabscheider an einen Modulsockel, insbesondere eines Ölfiltermoduls, oder an eine Zylinderkopfhaube der Brennkraftmaschine anflanschbar ist, wobei durch den Anschlussflansch (18) ein Teil der oder alle benötigten Strömungsverbindungen von und zu der Brennkraftmaschine verlaufen.

17. Zentrifugalabscheider nach Anspruch 16, **dadurch gekennzeichnet, dass** über den Anschlussflansch (18) zugleich eine elektrische Verbindung zur Stromversorgung des Elektromotors (3) herstellbar ist.

18. Zentrifugalabscheider nach einem der Ansprüche 1 bis 17, **dadurch gekennzeichnet, dass** die Drehzahl des den Rotor (2) antreibenden elektromotors (3) nach Maßgabe des Volumenstroms des Kurbelgehäuseentlüftungsgases veränderbar ist.

## Claims

1. A centrifugal precipitator (1) for precipitating oil mist from the crankcase ventilation gas of an internal combustion engine or for precipitating solid contaminations from the lubricant of an internal combustion engine, wherein the centrifugal precipitator (1) encompasses a rotatably drivable rotor (2), a housing (10), which accommodates the rotor (2), and a rotary drive for the rotor (2), wherein the rotary drive is formed by means of an electric motor (3), which is arranged in the housing (10), wherein the centrifugal precipitator (1) encompasses means for cooling the electric motor (3), and wherein provision is made for at least one cooling element (30) as means for cooling the electric motor (3),
**characterized in**
**that** the cooling element (30) is connected directly to a stator of the electric motor (3) or embodies the latter.

2. The centrifugal precipitator according to claim 1, **characterized in that** the crankcase ventilation gas or the coolant or the lubricant or the fuel or cooling air of the internal combustion engine or ambient air can flow over and/or flow through the cooling element (30) during the operation of the centrifugal precipitator (1).

3. The centrifugal precipitator according to claim 1 or 2, **characterized in that** the cooling element (30) encompasses a plurality of wings (22).

4. The centrifugal precipitator according to claim 3, **characterized in that** the cooling element (30) is rotationally symmetrical and that the wings (22) are oriented radially and are distributed across the circumference of the cooling element (30).

5. The centrifugal precipitator according to any one of claims 1 to 4, **characterized in that** the cooling element (30) is a one-piece metal part, preferably a pressure die casting made of light metal, in particular aluminum or magnesium.

6. The centrifugal precipitator according to any one of claims 1 to 5, **characterized in that** the housing (10) is a one-piece plastic part, preferably an injection molded part of a thermoplast, in particular polyamide.

7. The centrifugal precipitator according to any one of claims 1 to 6, **characterized in that** the electric motor (3) is arranged on a clean gas side of the centrifugal precipitator (1).

8. The centrifugal precipitator according to any one of claims 1 to 7, **characterized in that** the electric motor (3) is arranged on an upper side of the centrifugal precipitator (1), which can be accessed from the outside and which, in the assembled state, is located outside of the corresponding internal combustion engine.

9. The centrifugal precipitator according to claim 8, **characterized in that** the cooling element (30) is embodied as a cover (30'), which forms the upper side of the centrifugal precipitator (1).

10. The centrifugal precipitator according to claim 9, **characterized in that** the cover (30') accommodates or includes an electronic unit (34), which belongs to the electric motor (3).

11. The centrifugal precipitator according to claim 10, **characterized in that** the cover (30') is divided into two cover parts (30.1', 30.2'), which are thermally separated from one another, and **in that** a first cover part (30.1') is in heat conducting connection with the electric motor (3) and a second cover part (30.2') is in heat conducting connection with the electronic unit (34).

12. The centrifugal precipitator according to claim 10 or 11, **characterized in that** the electric motor (3) and the electronic unit (34) are separated from one another by means of a thermal insulation element (35).

13. The centrifugal precipitator according to any one of claims 9 to 12, **characterized in that** an attachment (7), in each case comprising an inlet (71) and outlet (72) for a cooling liquid, which flows over the cover (30'), can be connected to or is connected to the cover (30').

14. The centrifugal precipitator according to any one of claims 1 to 13, **characterized in that** the housing (10) encompasses a bottom part (11) comprising an inlet (13) for raw fluid, which is to be supplied to the rotor (2), and comprising an outlet (15) for fluid, which is separated from the raw fluid, wherein the bottom part (11) can be produced as a separate individual component and, relative to the remaining housing (10), can be connected to the latter in different rotational positions, preferably by means of welding or plugging them together.

15. The centrifugal precipitator according to any one of claims 1 to 13, **characterized in that** the housing (10) is embodied without a bottom part (11) and can be inserted or screwed into a module socket, in particular of an oil filter module, or into a cylinder head cover of the internal combustion engine, by sealing via seals.

16. The centrifugal precipitator according to any one of claims 1 to 15, **characterized in that** provision is made for a coupling flange (18), by means of which the centrifugal precipitator can be surface mounted to a module socket, in particular of an oil filter module, or to a cylinder head cover of the internal combustion engine, wherein a part or all of the required flow connections from and to the internal combustion engine run through the coupling flange (18).

17. The centrifugal precipitator according to claim 16, **characterized in that** an electrical connection for supplying power to the electric motor (3) can be established simultaneously via the coupling flange (18).

18. The centrifugal precipitator according to any one of claims 1 to 17, **characterized in that** the speed of the electric motor (3), which drives the rotor (2), can be varied in accordance with the volume flow of the crankcase ventilation gas.

## Revendications

1. Séparateur centrifuge (1) pour la séparation d'un nuage de fuel du gaz de purge de carter d'un moteur à combustion interne ou pour la séparation d'impuretés solides de l'huile lubrifiante d'un moteur à combustion interne, dans lequel le séparateur centrifuge (1) présente un rotor pouvant être entraîné en rotation (2), un logement (10) recevant le rotor (2) et un entraînement rotatif pour le rotor (2), dans lequel l'entraînement rotatif est formé par un moteur électrique (3) qui est disposé dans le logement (10), dans lequel le séparateur centrifuge (1) présente des moyens de refroidissement du moteur électrique (3) et dans lequel au moins un corps de refroidissement (30) est prévu en tant que moyen de refroidissement du moteur électrique (3),
**caractérisé en ce**
**que** le corps de refroidissement (30) est directement relié à un stator du moteur électrique (3) ou forme celui-ci.

2. Séparateur centrifuge selon la revendication 1, **caractérisé en ce que** le corps de refroidissement (30) peut être inondé et/ou parcouru lors du fonctionnement du séparateur centrifuge (1) par le gaz de purge de carter ou l'agent réfrigérant ou l'huile lubrifiante ou le carburant ou par l'air de refroidissement du moteur à combustion interne ou par l'air ambiant.

3. Séparateur centrifuge selon la revendication 1 ou 2, **caractérisé en ce que** le corps de refroidissement (30) présente plusieurs ailes (22).

4. Séparateur centrifuge selon la revendication 3, **caractérisé en ce que** le corps de refroidissement (30) est à symétrie de rotation et que les ailes (22) sont orientées radialement et réparties sur la périphérie du corps de refroidissement (30).

5. Séparateur centrifuge selon l'une quelconque des revendications 1 à 4, **caractérisé en ce que** le corps de refroidissement (30) est une pièce métallique d'une pièce, de préférence une pièce moulée sous pression en métal léger, notamment aluminium ou magnésium.

6. Séparateur centrifuge selon l'une quelconque des revendications 1 à 5, **caractérisé en ce que** le logement (10) est une pièce plastique d'une pièce, de préférence une pièce moulée par injection en un thermoplastique, notamment polyamide.

7. Séparateur centrifuge selon l'une quelconque des revendications 1 à 6, **caractérisé en ce que** le moteur électrique (3) est disposé sur un côté de gaz pur du séparateur centrifuge (1).

8. Séparateur centrifuge selon l'une quelconque des revendications 1 à 7, **caractérisé en ce que** le moteur électrique (3) est disposé sur un côté supérieur du séparateur centrifuge (1) accessible de l'extérieur, situé en dehors du moteur à combustion interne associé à l'état monté.

9. Séparateur centrifuge selon la revendication 8, **caractérisé en ce que** le corps de refroidissement (30) est réalisé en tant que couvercle (30') formant le côté supérieur du séparateur centrifuge (1).

10. Séparateur centrifuge selon la revendication 9, **caractérisé en ce que** le couvercle (30') reçoit ou contient un module électronique (34) appartenant au moteur électrique (3).

11. Séparateur centrifuge selon la revendication 10, **caractérisé en ce que** le couvercle (30') est divisé en deux parties de couvercle (30.1', 30.2') séparées thermiquement l'une de l'autre et qu'une première partie de couvercle (30.1') est en relation de conduction thermique avec le moteur électrique (3) et une seconde partie de couvercle (30.2') est en relation de conduction thermique avec le module électronique (34).

12. Séparateur centrifuge selon la revendication 10 ou 11, **caractérisé en ce que** le moteur électrique (3) et le module électronique (34) sont séparés l'un de l'autre par un élément d'isolation thermique (35).

13. Séparateur centrifuge selon l'une quelconque des revendications 9 à 12, **caractérisé en ce qu'**une garniture (7) avec à chaque fois une amenée (71) et une évacuation (72) pour un liquide de refroidissement inondant le couvercle (30') peut être reliée ou est reliée au couvercle (30').

14. Séparateur centrifuge selon l'une quelconque des revendications 1 à 13, **caractérisé en ce que** le logement (10) présente une partie inférieure (11) avec une entrée (13) pour du milieu brut à amener au rotor (2) et avec une sortie (15) pour du milieu séparé du milieu brut, dans lequel la partie inférieure (11) peut être fabriquée en tant que partie individuelle séparée et peut être reliée au logement, de préférence peut être soudée ou peut être emboîtée, dans différentes positions de torsion par rapport au reste du logement (10).

15. Séparateur centrifuge selon l'une quelconque des revendications 1 à 13, **caractérisé en ce que** le logement (10) est réalisé sans partie inférieure (11) et peut être inséré ou vissé dans un socle de module, notamment d'un module de filtre à huile, ou dans un capot de tête de cylindre du moteur à combustion interne en étanchéifiant par des joints.

16. Séparateur centrifuge selon l'une quelconque des revendications 1 à 15, **caractérisé en ce qu'**une bride de raccord (18) est prévue avec laquelle le séparateur centrifuge peut être bridé à un socle de module, notamment d'un module de filtre à huile, ou à un capot de tête de cylindre du moteur à combustion interne, dans lequel une partie des connexions d'écoulement ou l'ensemble des connexions d'écoulement nécessaires s'étendent depuis et vers le moteur à combustion interne à travers la bride de raccord (18).

17. Séparateur centrifuge selon la revendication 16, **caractérisé en ce qu'**une connexion électrique peut être fabriquée en même temps par le biais de la bride de raccord (18) pour l'alimentation électrique du moteur électrique (3).

18. Séparateur centrifuge selon l'une quelconque des revendications 1 à 17, **caractérisé en ce que** la vitesse de rotation du moteur électrique (3) entraînant le rotor (2) peut être modifiée en fonction du courant volumique du gaz de purge de carter.
